(19) Europäisches Patentamt
European Patent Office
Office européen des brevets

(11) EP 2 045 628 B1

(12) **EUROPEAN PATENT SPECIFICATION**

(45) Date of publication and mention
of the grant of the patent:
**28.01.2015 Bulletin 2015/05**

(51) Int Cl.:
***G01V 8/22*** *(2006.01)*

(21) Application number: **08016529.3**

(22) Date of filing: **19.09.2008**

(54) **Photoelectric barrier**

Lichtschranke

Barrière lumineuse

(84) Designated Contracting States:
**DE IT**

(30) Priority: **01.10.2007 IT TO20070691**

(43) Date of publication of application:
**08.04.2009 Bulletin 2009/15**

(73) Proprietor: **REER S.p.A.**
**10153 Torino (IT)**

(72) Inventors:
• **Scaravelli, Simone**
**10143 Torino (IT)**

• **Mirandola, Francesco**
**10097 Collegno (TO) (IT)**

(74) Representative: **Spandonari, Carlo**
**Spandonari & Modiano s.r.l.**
**Corso Duca degli Abruzzi 16**
**10129 Torino (IT)**

(56) References cited:
**DE-A1- 2 936 201**     **DE-A1- 4 422 497**
**DE-A1- 10 026 710**   **DE-A1- 19 705 225**
**DE-A1- 19 946 476**   **DE-U1- 29 714 438**

**Description**

DISCLOSURE

This invention is concerned with a photoelectric barrier for monitoring and controlling access to dangerous areas, having the ability to monitor the size and position of an object located inside the hazardous area. The invention is based on a special kind of optoelectronic sensor for the protection of dangerous areas.

Nowadays, the safety of operators inadvertently entering the operating range of dangerous portions of machines, or the access control for high-risk areas within which dangerous machines are in operation, is typically implemented by use of photoelectric barriers. These comprise, as a rule, a unit emitting infrared radiation, consisting of a set of LEDs and supported on a first column placed on a side of the controlled area, a receiving unit, consisting of an equal number of light receivers capable of receiving the beams emitted by the first column, which are suitably collimated by an optical system. A security control circuit, provided with redundance and self-diagnosis as common in the art, manages scanning and synching of the photo-elements, detects any interruptions of one or more beams and orders the arrest of the machine.

Although this system has proved effective and secure, on the other hand it is extremely rigid, as it does not have the ability to flexibly adapt to the machinery entrusted to its control. The ever more widespread so-called "intelligent" manufacturing techniques, as well as the integration of the individual machines into ever larger and more complex systems, require not only that the protection systems are secure, but also flexible and endowed with more advanced capabilities.

Prior art photoelectric barriers with reflectors in columns are known from DE19946476 and DE2936201.

In particular, where machines are provided with two or more working areas, where the processed material is to be alternatively loaded to, or unloaded from, the stationary portion of the machine, it is necessary that the human worker and his position in the area supervised by the barrier are detected, so that the machine is stopped only if the worker comes near the moving portion of the machine, i.e. near the danger zone. Today, these machines are protected by means of sensors that are less effective from the standpoint of security, e.g. by so-called "sensitive mats".

Such a necessity is typically found in large-size, automatic assembly lines, in material transfer systems, in automatic warehouses, all of which include gates for the transiting materials. In all these cases it is imperative to protect persons who inadvertently, by walking through the same gates, may become exposed to dangers created by the machinery located within the installation.

It is therefore a primary object of the invention to provide a photoelectric barrier for the protection of a dangerous area, provided with sensors and with a control system which are able to discriminate between persons and materials within the protected area.

More specifically, it is an object of the invention to provide a photoelectric barrier that is able to detect the shape, the size and the position of objects, whereby its control system can determine whether the detected object is an allowed object (e.g. a trolley transporting material to be processed) or a non-authorized object (e.g. a person, who may be harmed by staying in the area).

The invention attains the above and other objects and advantages by providing a photoelectric barrier having the features recited in claim 1. Other advantageous features are recited in the dependent claims.

A few preferred embodiments of the invention will now be described, given by way of non-limiting examples, with reference to the attached drawings, wherein:

Fig. 1 is a broken away, perspective view of a surveying column used in a photoelectric barrier according to a first preferred embodiment of the invention;

Fig. 2 is a schematic view in cross-section, on an enlarged scale, of a first preferred implementation of an emitter/receiver unit belonging to the barrier of Fig. 1;

Fig. 3 is a schematic view, similar to Fig. 2, of a second preferred implementation of the emitter/receiver unit;

Fig. 4 is a partial schematic view, in elevation, of a barrier comprising two surveying columns according to Fig. 1;

Fig. 5 is a broken away, perspective view of a second preferred embodiment of a surveying column usable in the photoelectric barrier of the invention;

Fig. 6 is a broken away, perspective view of a third preferred embodiment of a surveying column usable in the photoelectric barrier of the invention;

Fig. 7 is a block diagram of a meter for measuring the phase-difference between two sinusoidal waves, belonging to the control unit of the photoelectric barrier according to the invention;

Fig. 8 is a diagram representing waveshapes, useful for explaining the operation of the barrier;

Fig. 9 is a schematic representation of a barrier according to Fig. 4, during detection of round objects of various sizes;

Fig. 10 is a schematic representation similar to Fig. 9, for a barrier having columns according to Fig. 5;

Fig. 11 is a schematic representation of a barrier having columns according to Fig. 1, while detecting a convex object of generic shape;

Fig. 12 is a schematic representation similar to Fig. 11, for a barrier having columns according to Fig. 5.

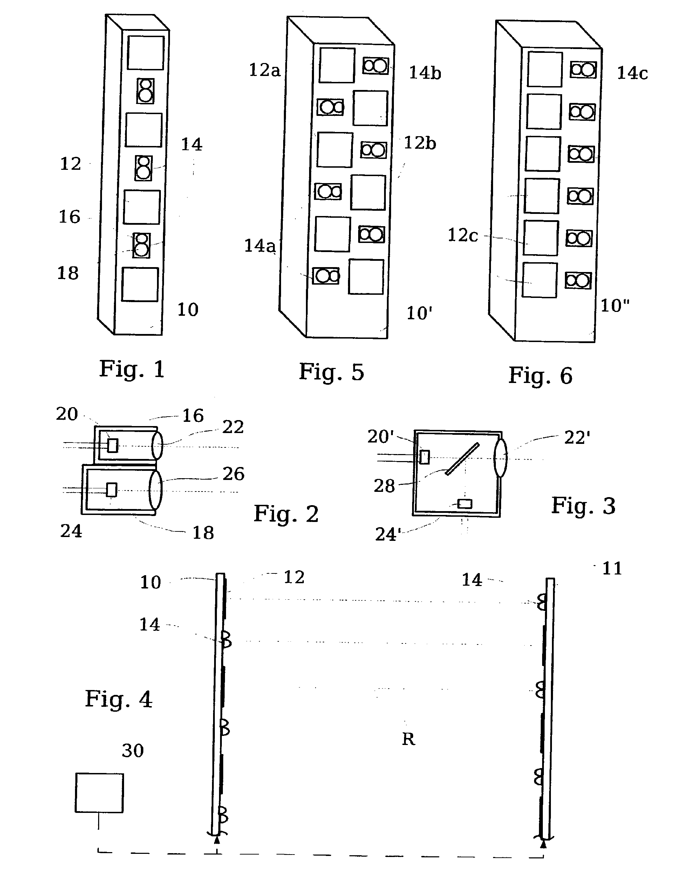

Fig. 1 shows a broken away segment of a surveying column 10, according to a first preferred embodiment, used in assembling photoelectric barriers according to the invention. For the sake of simplicity, column 10 is assumed to be installed horizontally, but it may of course be installed vertically or in any other intermediate, oblique orientation, depending on requirements.

Column 10 is a prismatic, elongate body 10, bearing a set of reflectors 12, on one if its sides. The reflectors are arranged for reflecting a received optical radiation in a horizontal direction, and are vertically aligned, alternately with an equal number of identical emitter/receiver units (or TX/RX units) 14. Each reflector 12 comprises an emitter such as 16 and a receiver such as 18, as further described below. The gap between the central axis of any TX/RX unit 14 and the central axis of an adjacent reflector 12 is preferably uniform, i.e. the pitch of the elements is preferably uniform, although this condition is not obligatory for the operation of the barrier of the invention, as it will appear from the disclosure below.

According to the embodiment of Fig. 2, each of TX/RX units 14 comprises: an emitter 16 consisting of a receptacle containing a LED 20 arranged for emitting a beam of infrared radiation and a collimating lens 22; and a receiver 18 consisting of a receptacle containing a photodiode 24, arranged for detecting infrared radiation received through a lens 26. Both lenses 24, 26 are close to each other, at a distance that is negligible with respect to the size of the column, and their optical axes (shown as broken lines on Fig. 2) are substantially parallel with on another and with the reflection axes of reflectors 12.

Fig. 3 shows another preferred structure of a TX/RX unit 14. An LED 20' projects its beam toward a lens 22', through an oblique semi-reflective mirror 28. The returning reflected beam passes through the same lens 22' and is reflected on mirror 28, thereby proceeding to a photodiode 24', arranged with its axis at right angles with LED 20'.

Each reflector 12 consists of a surface of a desired reflectance, or more exactly having a minimum value of reflectance, which is chosen so that it will produce a reflected signal sufficient for being used by receiver 24 or 24' to deliver an electric signal suitable for deriving a measure of the distance separating the two facing columns, or the distance from each column to any object that may come between. For instance, the signal could be used to obtain a measure of the flight time, either based on a pulse or on a phase difference. The reflector could be a flat sheet, either mirror-like or retroreflecting, or preferably a white or light-coloured opaque sheet. Since each of the reflectors is the destination of a radiation beam emitted by an associated TX/RX unit, in the following disclosure the reflectors will also be called "targets", although it should be understood that, both in the disclosure and in the appended claims, the term "target" embraces any type of object that may be hit by the radiation beams.

As schematically shown on Fig. 4, a photoelectric barrier comprises two identical surveying columns 10, 11, both substantially similar to the column shown on Fig. 1, and placed parallel and facing each other on both sides of a protected gate or area. The alternating sequences of reflectors 12 and TX/RX units 14 are preferably offset by one step to each other on the two facing columns 10, 11, so that a beam R emitted at right angles by a TX/RX unit 14 on one of the columns will hit reflector 12 on the other column, and vice versa. The aperture of the emission and reception beams is chosen so that the two beams substantially overlap over the entire width of the barrier, each terminating on the reflector of the opposite column.

The barrier is driven by a control unit 30 (shown schematically and further described below) for managing the synchronism and processing of signals, as also described below. For the sake of simplicity, control unit 30 is drawn outside the barrier, although in practice it will most often be installed inside one of both columns 10, 11.

It will be apparent for a person skilled in the art that the alignment of the axes of the TX/RX units with the axes of the facing reflectors could be obtained, rather than by offsetting the elements in both columns, by suitably slanting the axes of the corresponding elements.

The optical beams are generated as described above, in stacked configuration and at definite distances so that the entire height of the column is covered, and are projected in the direction of the facing column so that they will each hit its corresponding reflector or target 12. The fraction of optical flow reflected by target 12 in axial alignment with the direction of emission is collimated by optical unit 26 0 22", which is associated with the corresponding receiver 24 or 24', and is used to measure the distance separating each TX/RX unit 14 from the corresponding target 12, as further described below.

Though not strictly necessary, the emission of the individual optical beams is made in succession, so that each receiver can only detect the optical signal reflected by its own associated target, and the measurement of the distance for any beam cannot be disturbed by an adjacent beam.

The total response time, i.e. the time necessary for detecting and emasuring the object, will therefore depend on the total number of beams, on the time necessary to perform the individual distance measurements and on the processing of the distance information.

Fig. 5 represents a second embodiment of a surveying column suitable for a barrier according to the invention. Column 10' supports two alternating sets of reflectors 12A, 12B and emitter/receiver units 14A, 14B, which are side by side and offset to each other. Consequently, when two columns 10' face each other similarly to the barrier of Fig. 4, the number of beams is doubled for the same height of the barrier, i.e. the resolution of the barrier is doubled.

Fig. 6 shows a third embodiment of a surveying column 10", similar to the column of Fig. 5, but having separately aligned reflectors 12C and TX/RX units 14C. This column operates identically to the column of Fig. 5, with identical resolution.

In operation, the system scans the barrier by enabling each beam in succession, reading the respective return signal, deriving a measurement of the target distance by comparison of the transmitted signal with the received reflected signal (by a method described below), and finally comparing the distances with values stored at installation, in order to enable its outputs only if the measurements are alike (within a predetermined measuring tolerance). The control unit, beside managing the scanning and synchronization of the photo-elements, derives the measured distance values of the target of each TX/RX unit and processes them as described below.

Three are the main known methods of electro-optical measurement of distances. They are respectively based on interferometry, on triangulation and on the measurement of the time-of-flight (TOF). The latter approach may be implemented as a measurement of phase difference of an emitted wave train with respect to the corresponding reflected wave train, or as a measurement of a time delay from a transmitted pulse to a received reflected pulse.

Among the above methods, interferometry and triangulation, although both very accurate, are only suitable for measuring small distances, of the order of a few centimeters or less, and are therefore ill-suited to be put to service with barriers having a width of several meters. Accordingly, the invention uses TOF approaches of both types mentioned.

Depending on whether the barrier is free or is being crossed by an object, and provided that the object has a sufficient reflectance, the control unit will detect, for each TX/RX unit, a distance equal to the total width of the barrier or the distance of the edge of the object from the respective TX/RX unit. Subsequent processing will determine whether such distances are compatible with an authorized object, and, if not, the machine will be stopped. Obviously, the absence of any return signal having a detectable amplitude is by itself an indication that a non-approved, and therefore unauthorized, target must be present in the barrier, such that an alarm must be triggered.

In a first embodiment of the invention, a TOF method based on phase detection is chosen for measuring distances which is capable of measuring distances with 1-centimeter accuracy. According to this method the system transmits a periodical signal toward the target, usually a sinewave, it waits for its echo, it amplifies it and it compares the phase of the transmitted signal with the phase of the received signal. A method based on amplitude modulation with homodyne detection is preferred, because of its simplicity: the emitter beam is modulated with a sinusoidal signal at frequency $f$; the path followed by the signal from the output of the generator all the way to the detector is twice the distance (R) from the TX/RX unit to the target, and the distance R therefore depends on the phase difference ($\varphi$) from the modulating signal to the received signal according to the simple relationship:

$$R = (c * \varphi)/ 4\pi * f_{mod} \qquad (1)$$

The relationship shows that the phase difference is linearly proportional to the distance and to the modulating frequency. For instance, if $f$ = 20 MHz, a distance variation of 1 cm gives rise to a phase variation of 0.48°.

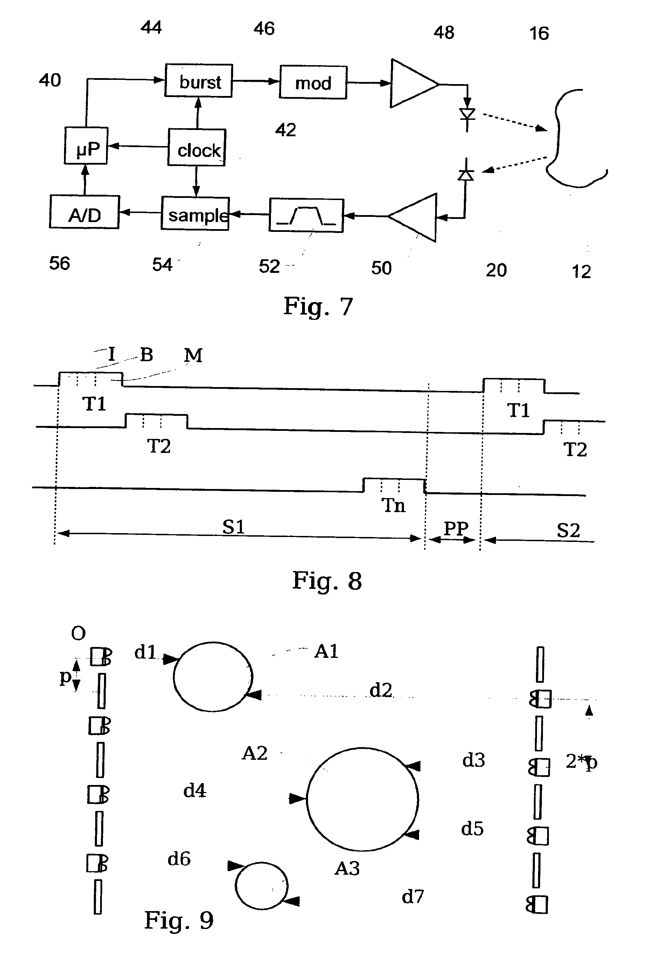

Fig. 7 is the block diagram of a homodyne phase meter used for measuring the distance in the barrier of Fig. 4. A microprocessor 40, clocked by a clock generator 42, drives a burst generator 44 to enable an sinusoidal amplitude modulator 46 for successive spaced periods, so that successive bursts are generated, comprising, e.g., a few tens of waves. The bursts, via a driver amplifier 48, drive the associated LED 16 so that it will emit a corresponding sinusoidal radiation. The return radiation, reflected by a target 12, is detected by photodiode 20, whose electric signal is amplified in an amplifier 50, filtered in a bandpass filter 52, sampled in a sampler 54, and finally converted to a digital signal in an A/D converter 56. Microprocessor 40 compares the digital signal as emitted with the digital signal as received by the A/D converter 56, in order to derive a distance measurement.

This approach is therefore based on a combination of a continuous amplitude modulation and a pulsed modulation : for each measurement, successive trains are transmitted, each comprising a limited number of sinewaves (bursts) followed by long pauses. By this procedure, it is possible to transmit a much higher peak power for each beam; the measurement accuracy is thereby improved, while a low average power is maintained at the same time.

The time assigned to each window is divided into three portions :

- in a first portion (initialization) the system is adjusted so that it will operate in a linear range with respect to the emitted signal and the received signal, say by adjusting the power of the emitted signal and/or the amplification of the reflected signal received, so that the system is kept linear independently from the reflectivity level of the target, while also keeping in consideration the best conditions for the signal-to-noise ratio;

- in the second portion, the measuring burst is emitted;

- the third portion is used for the distance measurement.

Fig. 8 is a diagram of the scanning cycle for the emitter/receiver units in a barrier according to Fig. 4. References T1, T2, ..., Tn denote time windows in which the above mentioned steps of initialization (I), burst emission (B), and distance measurement (M) for each successive TX/RX unit are carried out. At the end of each scanning cycle S1, S2, and before the successive cycle is started, a further time period PP is assigned for the post-processing of the measurements, in which the object is recognized.

It should be noted that this measuring method involves a measurement ambiguity inherent to the kind of signal used, as the phase meter cannot distinguish two signals with phases $\varphi + k360°$ and $\varphi$, respectively. However, it can be derived from relation (1) that the maximum unambiguous measurable distance in the foregoing example is 7.5 m ; this value is sufficient for most applications considered herein, so that the above ambiguity is irrelevant.

As an alternative to measuring the phase by means of a burst of modulated radiation, the invention also provides for a delay measurement of the delay with which a narrow pulse emitted by the emitter returns to the receiver in the TX/RX unit. In this case the linearity of the system is less crucial, but its implementation is more complex and expensive, because, in order to achieve a satisfactory accuracy, very narrow pulses with short rise times are required, and consequently bandwidths of several GHz. In any case, the implementation lies within the ability of any person skilled in the art, by using known means. The method is described, for instance, in the academic paper "Integrated electronic and optoelectronic circuits and devices for pulsed Time-Of-Flight laser rangefinding", Pasi Palojärvi, University of Oulu, 2003, Oulu University Press, (ISBN 951-42-6966-7).

Other variations are possible within the principle of distance measurement based on a measure of the time-of-flight (TOF), beside the above disclosed examples, such as techniques base on sequences of pulses, as known in the art, wich techniques are readily applicable to the barrier of the invention.

Fig. 9 schematically shows a barrier according to Fig. 4, during transit of three cylindrical objects. For each individual TX/RX unit, the minimum detectable object size in the worst case is determined by the divergence of the optical beam of the TX. Since the optical beams have circular symmetry and approximately conical shape, the worst case prevails when the object is in contact with the reflector and completely intercepts the beam : if, for instance, a cylindrical object with diameter D = 30 mm is to be detected, at a distance of 6 m (position of the reflector with respect to the pair TX/RX), the divergence of the optical beam from the TX must be smaller than 5 mrad.

The distance *p* between the optical axes of two adjacent units, the divergence of the optical beam from the projector and the operating distance (distance between the two columns) determine the minimum size of an object that is detectable under all conditions and for all positions within the hazardous area.

For simplicity, and in consideration of the small beam divergence, the beam is assumed to have a cylindrical shape of a diameter D equal to its maximum size (i.e. when TX and RX are placed at their maximum operating distance). With this assumption, the detection capability of each individual beam may be taken as uniform, constant and equal to D for any distance between TX and RX; therefore, within the maximum operating range, the mutual distance between TX and RX, as well as the position of the object within that distance, may be ignored.

If the optical beams are uniformly arranged and if D = p, as it is appropriate to select, Fig. 9 shows the system resolution for the barrier of Fig. 4:

- the cylindrical object A3 (diameter < 2*p) might not be detected, or the distance measurements d6 and d7 might be affected with gross errors, since the optical beam of TX partially hits the object and its associated reflector at the same time;

- the cylindrical object A1 (diameter = 2*p) is always properly detected if it occupies the position shown; however, if its center were in position O1, the measurement of the distance d1 might suffer considerable errors as explained above, and the position measurement would not be assured;

- the cylindrical object A2 (diameter = 3*p) is always detected, because, whatever position it may occupy inside the hazardous area of the barrier, it is always possible to have at least one correct measurement for each side.

For the column configuration of Fig. 4, a value 3 * p can therefore be assumed as minimum diameter of a detectable object.

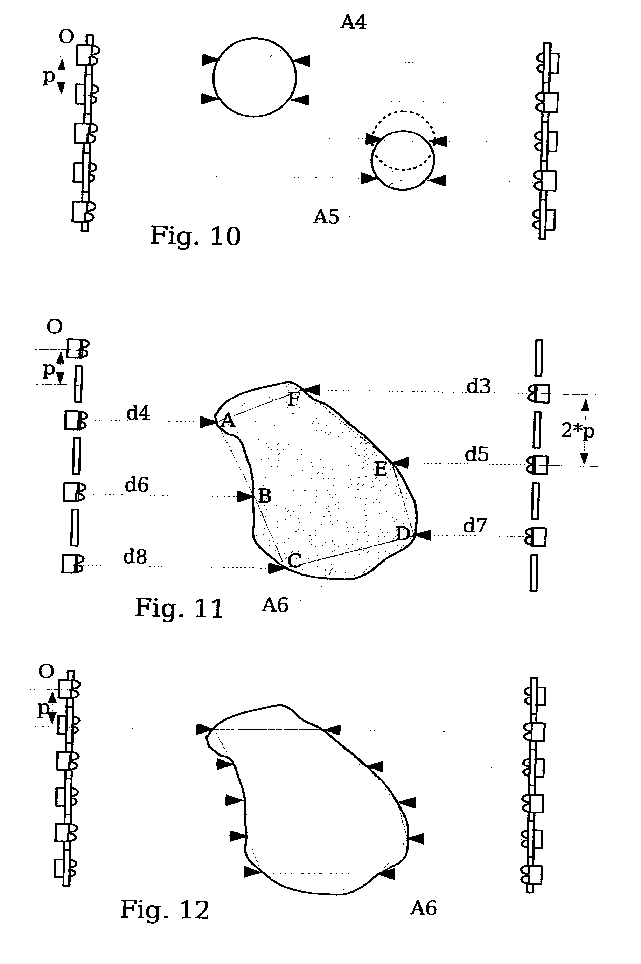

For the column of Fig. 5 or 6, it can be seen from Fig. 10 that:

- the cylindrical object A4 (diameter = 2*p) is always detected, because for any position or orientation within the hazardous area of the barrier it is always possible to have at least one correct measurement for each side;

- the cylindrical object A5 (diameter < 2*p) is always detected accurately when its center is located in position O1; however, if its center were in position O2, the measured distances d3 and d4, or d5 and d6, might be affected with considerable errors as explained above, and the position measurement would not be assured.

From the explanation above, it follows that in the latter case the minimum diameter of a detectable object is 2 * p.

With reference to Fig. 11, it is described below how an object of whatever convex shape can be detected using the barrier of Fig. 4.

Since the optical beams have a conical shape with approximately circular cross-section, , their intercept with the object surface may be represented in the plane as the intersection point (in the barrier plane) between the optical axis and the section of the surface of the object to be detected.

For the barrier configuration of Fig. 4, Fig. 11 shows that an arbitrary convex object A6 gives rise, for instance, to the following detected points, with reference to the origin O:

| Point | ordinate | abscissa |
|---|---|---|
| A | 2*p | d4 |
| B | 4*p | d6 |
| C | 6*p | d8 |
| D | 5*p | d7 |
| E | 3*p | d5 |
| F | p | d3 |

By means of known algorithms, the polygon passing through those points can then be readily constructed, and consequently the area and the position of the object can be determined.

Fig. 12 shows the situation when a barrier is used having columns according to Figs. 5 or 6: in this case a better accuracy is obtained, because the density of the optical beams is doubled, and so is the number of detected points.

It can be seen that implementing and programming a control unit to put into practice the above-described procedures, and more particularly for processing the collected data, lies within the ability of the person skilled in the art on the basis of known information.

It must be understood that numerous changes can be brought to the preferred embodiments of barrier described above. By way of example, emitters 20 or 20', could be based, rather than on LEDs, on another kind of illuminator, such as laser, and the optical radiation, rather than being in the infrared range, could be in the visible spectrum, or ultraviolet. Moreover, although a barrier with vertical columns is assumed in the examples disclosed, it should be understood that the barrier could be oriented horizontally, e.g. for moitoring the access to a well or the floor of a room.

## Claims

1. A photoelectric barrier comprising two surveying columns (10, 11) to be placed on opposite sides of an area to be monitored, whereby each column has a set of reflectors (12), aligned and facing the opposite column, and an equal number of aligned emitter/receiver units (14), each comprising a radiation emitter (16) oriented and optically collimated for illuminating a predetermined reflector (12) of the opposite column, and a radiation receiver (18) oriented and optically collimated for receiving radiation reflected by the reflector that is illuminated by the associated emitter, and further comprising a control unit (30) for causing each emitter (16) to emit an optical radiation signal and for causing the receiver (18) associated in the same emitter/receiver unit to receive said radiation signal after reflection on a target, **characterized in that** the control unit (30) is programmed for computing the distance of the target from each emitter/receiver unit and for determining the shape and position of the target by means of a predetermined algorithm.

2. The photoelectric barrier of claim 1, **characterized in that** the emitter (16) and the receiver (18) that are associated in each emitter/receiver unit (14) are provided with optical collimation means (22, 26; 22') for restricting the illumination and reception area to the pertinent associated receiver (12).

3. The photoelectric barrier of claim 1 or 2, **characterized in that** each emitter/ receiver unit (14) comprises an emitter (16) and a receiver (18) arranged side by side, with axes substantially parallel and near each other at a distance small with respect to the distance between the mutually facing columns.

4. The photoelectric barrier of claim 1 or 2, **characterized in that** each emitter/ receiver unit (14) comprises an emitter (20') and a receiver (24') arranged with crossing axes, and a semi-reflective mirror (28) arranged obliquely in the intersection between said axes, whereby the semi-reflective mirror will allow passage of the radiation emitted by the emitter (20') and reflect at least a portion of the return radiation toward the receiver (24').

5. The photoelectric barrier of any of claims 1 to 4, **characterized in that** the reflectors (12) and the emitter/receiver units (14) in each column (10, 11) are arranged alternately along the column.

6. The photoelectric barrier of claim 5, **characterized in that** the reflectors (12) and the emitter/receiver units (14) in one column (10) are arranged at shifted levels with respect to the other column (11).

7. The photoelectric barrier of any of claims 1 to 4, **characterized in that** the reflectors (12) and the emitter/receiver units (14) in each column are arranged in respective sequences aligned and side by side to each other.

8. The photoelectric barrier of any of claims 1 to 7, **characterized in that** it is controlled by a control unit (30) programmed for causing each emitter (16) to emit an optical radiation signal in timed sequence and for causing each associated receiver (18) to receive a return optical radiation signal, and for deriving a signal representing the distance of the emitter/receiver unit (14) from a target having a predetermined minimum reflectance.

9. The photoelectric barrier of claim 8, **characterized in that** the control unit (30) is programmed for deriving said distance signal by measuring the delay time from the emitted signal to the signal received after reflection.

10. The photoelectric barrier of claim 8 or 9, **characterized in that** the control unit (30) is programmed for activating a single emitter/receiver at a time in succession.

11. The photoelectric barrier of claim 10, **characterized in that** said optical radiation signal is a wave train that is amplitude-modulated with a sinusoidal signal of a predetermined frequency, and the control unit (30) is programmed for comparing the phase of the modulation in the return radiation received by each receiver with the phase of the modulation of the wave train emitted by the associated emitter, and for deriving from it a measure of the respective emitter/receiver unit from said target..

12. The photoelectric barrier of claim 10, **characterized in that** said optical radiation signal is a radiation pulse, and the control unit (30) is programmed for measuring the delay time of the return pulse received by each receiver with respect to the pulse emitted by the associated emitter, and for deriving from it a measure of the respective emitter/receiver unit from said target.

**Patentansprüche**

1. Lichtschranke, umfassend zwei Beobachtungssäulen (10, 11), welche auf gegenüberliegenden Seiten eines zu überwachenden Bereichs aufgestellt sind, wobei jede Säule einen Satz Reflektoren (12) aufweist, welche auf die gegenüberliegende Säule ausgerichtet und dieser zugewandt sind, und jede Säule eine gleiche Anzahl von ausgerichteten Emitter-/Empfänger-Einheiten (14) aufweist, welche jeweils einen Strahlungsemitter (16) umfassen, der zum Beleuchten eines vorbestimmten Reflektors (12) der gegenüberliegenden Säule orientiert und optisch kollimiert ist, und welche jeweils einen Strahlungsempfänger (18) umfassen, der zum Empfangen von Strahlung orientiert und optisch kollimiert ist, welche durch den vom zugeordneten Emitter beleuchteten Reflektor reflektiert wird, und weiter umfassend eine Steuereinheit (30) zum Veranlassen jedes Emitters (16), ein optisches Strahlungssignal zu emittieren, und zum Veranlassen des derselben Emitter-/Empfänger-Einheit zugeordneten Empfängers (18), das Strahlungssignal nach einer Reflektion an einem Objekt zu empfangen, **dadurch gekennzeichnet, dass** die Steuereinheit (30) zum Berechnen des Abstandes des Objekts von jeder Emitter-/Empfänger-Einheit und zum Bestimmen der Form und Position des Objekts mittels eines vorbestimmten Algorithmus programmiert ist.

2. Lichtschranke nach Anspruch 1, **dadurch gekennzeichnet, dass** der Emitter (16) und der Empfänger (18), welche jeder Emitter-/Empfänger-Einheit (14) zugeordnet sind, mit optischen Kollimationsmitteln (22, 26; 22') zum Begrenzen des Beleuchtungs- und des Empfangsbereichs auf den entsprechend zugeordneten Empfänger (12) versehen sind.

3. Lichtschranke nach Anspruch 1 oder 2, **dadurch gekennzeichnet, dass** jede Emitter-/Empfänger-Einheit (14) einen Emitter (16) und einen Empfänger (18) umfasst, welche mit im Wesentlichen parallelen Achsen nebeneinander und in einem Abstand, welcher klein hinsichtlich des Abstandes zwischen den sich gegenseitig zugewandten Säulen ist, nahe beieinander angeordnet sind.

4. Lichtschranke nach Anspruch 1 oder 2, **dadurch gekennzeichnet, dass** jede Emitter-/Empfänger-Einheit (14) einen Emitter (20') und einen Empfänger (24') umfasst, welche mit gekreuzten Achsen angeordnet sind, und einen halbreflektierenden Spiegel (28) umfasst, welcher schräg im Schnittpunkt zwischen den Achsen angeordnet ist, wobei der halbreflektierende Spiegel einen Durchtritt der vom Emitter (20') emittierten Strahlung ermöglicht und zumindest einen Anteil der Rückstrahlung in Richtung des Empfängers (24') reflektiert.

5. Lichtschranke nach einem der Ansprüche 1 bis 4, **dadurch gekennzeichnet, dass** die Reflektoren (12) und die Emitter-/Empfänger-Einheiten (14) in jeder Säule (10, 11) abwechselnd entlang der Säule angeordnet sind.

6. Lichtschranke nach Anspruch 5, **dadurch gekennzeichnet, dass** die Reflektoren (12) und die Emitter-/Empfänger-Einheiten (14) in einer Säule (10) auf versetzten Ebenen hinsichtlich der anderen Säule (11) angeordnet sind.

7. Lichtschranke nach einem der Ansprüche 1 bis 4, **dadurch gekennzeichnet, dass** die Reflektoren (12) und die Emitter-/Empfänger-Einheiten (14) in jeder Säule in entsprechend ausgerichteten Abfolgen und nebeneinander angeordnet sind.

8. Lichtschranke nach einem der Ansprüche 1 bis 7, **dadurch gekennzeichnet, dass** die Lichtschranke durch eine Steuereinheit (30) gesteuert wird, welche programmiert ist zum Veranlassen jedes Emitters (16), ein optisches Strahlungssignal in einer zeitgesteuerten Abfolge zu emittieren, und zum Veranlassen jedes zugeordneten Empfängers (16), ein optisches Rückstrahlungssignal zu empfangen, und zum Ableiten eines Signals, welches den Abstand der Emitter-/Empfänger-Einheit (14) von einem Objekt darstellt, welches eine vorbestimmte Minimalreflektion aufweist.

9. Lichtschranke nach Anspruch 8, **dadurch gekennzeichnet, dass** die Steuereinheit (30) zum Ableiten des Abstandssignals durch ein Messen der Verzögerungszeit zwischen dem emittierten Signal und dem nach der Reflektion empfangenen Signal programmiert ist.

10. Lichtschranke nach Anspruch 8 oder 9, **dadurch gekennzeichnet, dass** die Steuereinheit (30) zum Aktivieren jeweils eines einzelnen Emitters/Empfängers nacheinander programmiert ist.

11. Lichtschranke nach Anspruch 10, **dadurch gekennzeichnet, dass** das optische Strahlungssignal ein Wellenzug ist, welcher mit einem Sinussignal einer vorbestimmten Frequenz Amplituden-moduliert ist, und die Steuereinheit (30) programmiert ist, um die Modulationsphase der Rückstrahlung, welche durch jeden Empfänger empfangen wird, mit der Modulationsphase des Wellenzugs, welcher durch den zugeordneten Emitter emittiert wird, zu vergleichen und daraus ein Maß der entsprechenden Emitter-/Empfänger-Einheit von dem Objekt abzuleiten.

12. Lichtschranke nach Anspruch 10, **dadurch gekennzeichnet, dass** das optische Strahlungssignal ein Strahlungspuls ist, und die Steuereinheit (30) programmiert ist, um die Verzögerungszeit des Rückpulses, welcher durch jeden Empfänger empfangen wird, hinsichtlich des Pulses, welcher durch den zugeordneten Emitter emittiert wird, zu messen und daraus ein Maß der entsprechenden Emitter-/Empfänger-Einheit von dem Objekt abzuleiten.

**Revendications**

1.  Barrière photoélectrique comprenant deux colonnes d'examen (10, 11) destinées à être placées sur des côtés opposés d'une zone devant être contrôlée, selon laquelle chaque colonne comporte un jeu de réflecteurs (12), alignés avec la colonne opposée et faisant face à celle-ci, et un nombre égal d'unités d'émetteur/récepteur alignées (14), comprenant chacune un émetteur de rayonnement (16) orienté et optiquement collimaté pour éclairer un réflecteur prédéterminé (12) de la colonne opposée, et un récepteur de rayonnement (18) orienté et optiquement collimaté pour recevoir un rayonnement réfléchi par le réflecteur qui est éclairé par l'émetteur associé, et comprenant de plus une unité de commande (30) pour faire émettre par chaque émetteur (16) un signal de rayonnement optique et pour faire recevoir par le récepteur (18) associé dans la même unité d'émetteur/récepteur ledit signal de rayonnement après réflexion sur une cible, **caractérisée en ce que** l'unité de commande (30) est programmée de façon à calculer la distance de la cible à partir de chaque unité d'émetteur/récepteur et à déterminer la forme et la position de la cible à l'aide d'un algorithme prédéterminé.

2.  Barrière photoélectrique selon la revendication 1, **caractérisée en ce que** l'émetteur (16) et le récepteur (18) qui sont associés dans chaque unité d'émetteur/récepteur (14) sont munis de moyens de collimation optique (22, 26 ; 22') pour restreindre la zone d'éclairage et de réception au récepteur associé pertinent (12).

3.  Barrière photoélectrique selon la revendication 1 ou 2, **caractérisée en ce que** chaque unité d'émetteur/récepteur (14) comprend un émetteur (16) et un récepteur (18) disposés côte à côte, avec des axes sensiblement parallèles et proches l'un de l'autre, à une distance qui est petite par rapport à la distance entre les colonnes en vis-à-vis mutuel.

4.  Barrière photoélectrique selon la revendication 1 ou 2, **caractérisée en ce que** chaque unité d'émetteur/récepteur (14) comprend un émetteur (20') et un récepteur (24') disposés avec des axes croisés, et un miroir semi-réfléchissant (28) disposé en oblique dans l'intersection entre lesdits axes, selon laquelle le miroir semi-réfléchissant permettra le passage du rayonnement émis par l'émetteur (20') et réfléchira au moins une partie du rayonnement de retour vers le récepteur (24').

5.  Barrière photoélectrique selon l'une quelconque des revendications 1 à 4, **caractérisée en ce que** les réflecteurs (12) et les unités d'émetteur/récepteur (14) dans chaque colonne (10, 11) sont disposés en alternance le long de la colonne.

6.  Barrière photoélectrique selon la revendication 5, **caractérisée en ce que** les réflecteurs (12) et les unités d'émetteur/récepteur (14) dans une colonne (10) sont disposés à des niveaux décalés par rapport à l'autre colonne (11).

7.  Barrière photoélectrique selon l'une quelconque des revendications 1 à 4, **caractérisée en ce que** les réflecteurs (12) et les unités d'émetteur/récepteur (14) dans chaque colonne sont disposés en des séquences respectives alignées et côte à côte les unes par rapport aux autres.

8.  Barrière photoélectrique selon l'une quelconque des revendications 1 à 7, **caractérisée en ce qu'**elle est commandée par une unité de commande (30) programmée de façon à faire émettre par chaque émetteur (16) un signal de rayonnement optique selon une séquence minutée et à faire recevoir par chaque récepteur associé (18) un signal de rayonnement optique de retour, et à dériver un signal représentant la distance de l'unité d'émetteur/récepteur (14) à partir d'une cible ayant un facteur de réflexion minimal prédéterminé.

9.  Barrière photoélectrique selon la revendication 8, **caractérisée en ce que** l'unité de commande (30) est programmée de façon à dériver ledit signal de distance par la mesure du temps de retard du signal émis au signal reçu après réflexion.

10. Barrière photoélectrique selon la revendication 8 ou 9, **caractérisée en ce que** l'unité de commande (30) est programmée de façon à activer un émetteur/récepteur unique à la fois en succession.

11. Barrière photoélectrique selon la revendication 10, **caractérisée en ce que** ledit signal de rayonnement optique est un train d'ondes qui est modulé en amplitude avec un signal sinusoïdal d'une fréquence prédéterminée, et **en ce que** l'unité de commande (30) est programmée de façon à comparer la phase de la modulation dans le rayonnement de retour reçu par chaque récepteur à la phase de la modulation du train d'ondes émis par l'émetteur associé, et à dériver à partir de cela une mesure de l'unité d'émetteur/récepteur respective à partir de ladite cible.

12. Barrière photoélectrique selon la revendication 10, **caractérisée en ce que** ledit signal de rayonnement optique est une impulsion de rayonnement, et **en ce que** l'unité de commande (30) est programmée de façon à mesurer le temps de retard de l'impulsion de retour reçue par chaque récepteur par rapport à l'impulsion émise par l'émetteur associé, et à dériver à partir de cela une mesure de l'unité d'émetteur/récepteur respective à partir de ladite cible.

12a  14b

12  14

12b

16

14a

18

10  10'

**Fig. 1**  **Fig. 5**

12c

14c

10"

**Fig. 6**

20  16

22

26

24  18

**Fig. 2**

20'  22'

28

24'

**Fig. 3**

10  12  14  11

14

**Fig. 4**

30

R

Fig. 7

Fig. 8

Fig. 9

A4

O

p

**Fig. 10**    A5

O

p

d4    F    d3

A    2*p

d6    E    d5

B

d8    D    d7

C

**Fig. 11**    A6

O

p

**Fig. 12**    A6

**EP 2 045 628 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19946476

- DE 2936201

**Non-patent literature cited in the description**

- **PASI PALOJÄRVI.** Integrated electronic and optoelectronic circuits and devices for pulsed Time-Of-Flight laser rangefinding. Oulu University Press, 2003